# EUROPEAN PATENT APPLICATION

(11) **EP 4 826 766 A1**
(43) Date of publication of application: **21.10.2026**
(21) Application number: 25907479.7
(22) Date of filing: 06.11.2025
(51) Int. Cl.: H01M 4/04, H01F 7/02, H01M 4/1393, H01M 4/133, H01M 10/0525, H01M 4/02

(54) **NEGATIVE ELECTRODE MANUFACTURING SYSTEM AND NEGATIVE ELECTRODE MANUFACTURING METHOD USING SAME**

(30) Priority: 16.12.2024 KR 20240187335
(71) Applicant: LG Energy Solution, Ltd., Seoul 07335 (KR)
(72) Inventor: PARK, Han Saem, Daejeon 34122 (KR); LEE, Joong Hoon, Daejeon 34122 (KR)
(74) Representative: Plasseraud IP
(86) International application number: PCT/KR2025/018200
(87) International publication number: WO 2026/134662

(57) **Abstract**

The present disclosure relates to a negative electrode manufacturing system and a method for manufacturing a negative electrode using the same. Since the negative electrode manufacturing system exhibits magnetism of mutually different polarities in the body of the upper block and the die lip of the lower block of the dual-slot die, it is possible to directly discharge a negative electrode slurry to which a magnetic field has been applied onto a moving current collector. In addition, the negative electrode slurry discharged from the dual-slot die is applied such that the in-plane crystallographic planes of the carbon-based negative electrode active material are oriented at a predetermined angle with respect to the surface of the current collector on which the negative electrode slurry is applied, thereby providing the advantage of achieving a high degree of orientation of the carbon-based negative electrode active material after rolling.

## Description

### [Technical Field]

The present disclosure relates to a system for manufacturing a negative electrode and a method for manufacturing a negative electrode using the same.

This application claims the benefit of Korean Patent Application No. 10-2024-0187335, filed on December 16, 2024, the disclosure of which is incorporated herein by reference.

### [Background]

In recent years, secondary batteries have been widely applied not only to small devices such as portable electronic devices, but also to medium- and large-sized devices such as battery packs for hybrid vehicles and electric vehicles, or energy storage systems (ESS). A secondary battery is an energy storage device capable of charging and discharging that is composed of a stacked structure of a positive electrode/separator/negative electrode. In general, the positive electrode includes a lithium metal oxide as a positive electrode active material, and the negative electrode includes a carbon-based negative electrode active material such as graphite. In secondary batteries including these components, lithium ions released from the positive electrode during charging are intercalated into the carbon-based negative electrode active material of the negative electrode, and lithium ions contained inside the carbon-based negative electrode active material are deintercalated into the lithium metal oxide of the positive electrode during discharging, thereby repeating the charge/discharge cycle.

Graphite materials such as natural graphite and artificial graphite can be cited as negative electrode active materials used in the negative electrode. Such graphite has a layered structure, in which carbon atoms form a network structure and are arranged in a planar manner, with multiple such layers stacked on top of each other. During charging, lithium ions enter through the edge surface of these graphite layers (the plane where layers are stacked) and diffuse between the layers; during discharging, lithium ions are deintercalated and released from the edge surface of the layers. Accordingly, since graphite has a lower electrical resistivity in the in-plane direction of the layers than in the stacking direction, a conductive pathway for electrons detouring along the in-plane direction of the layers is formed.

In this context, in conventional lithium secondary batteries using graphite, a technique has been proposed for magnetically orienting the graphite contained in the negative electrode in order to improve the charge performance of the negative electrode. Specifically, during negative electrode formation, a configuration is adopted in which the (002) crystal plane of graphite is oriented substantially perpendicular to the negative electrode current collector in a magnetic field and is then fixed. In this case, since the edge surface of the graphite layer faces the positive electrode active layer, the lithium-ion transport path is shortened, thereby improving the charge performance of the battery.

Such orientation of graphite can be induced by applying a negative electrode slurry containing graphite onto a negative electrode current collector and then applying a magnetic field to the undried negative electrode slurry. However, considering the production speed during actual mass production of negative electrodes, there is a problem in that it is difficult to secure sufficient magnetic field application time to induce graphite alignment in the negative electrode slurry. Furthermore, even if this issue is resolved, when rolling is performed to increase the energy density of the negative electrode, the degree of graphite orientation is reduced, which limits the effectiveness of improvements in charge performance of the secondary battery.

### [Prior art document]

### [Patent document]

Japanese Laid-open Patent Publication No. 2023-083791

### [Summary]

### [Technical Problem]

An object of the present disclosure is to provide a negative electrode manufacturing technology that exhibits high productivity during negative electrode manufacturing and achieves excellent graphite orientation in the finally manufactured negative electrode after rolling.

### [Technical Solution]

In order to solve the above-described problems,
the present disclosure provides a negative electrode manufacturing system including:
a transfer part configured to transport a current collector; and
a dual-slot die comprising an upper block, an intermediate block, and a lower block, a first slot provided through a gap between the upper block and the intermediate block and configured to discharge a first negative electrode slurry, and a second slot provided through a gap between the intermediate block and the lower block and configured to discharge a second negative electrode slurry, wherein
when each of the upper block, intermediate block, and lower block is divided into a die lip forming a discharge outlet at each fore-end part and a body extending from the die lip, the body of the upper block and the die lip of the lower block exhibit magnetism of mutually different polarities.

The body of the upper block and the die lip of the lower block may each include at least one of a permanent magnet and an electromagnet.

Here, a distance between the magnet included in the body of the upper block and the magnet included in the die lip of the lower block may be adjustable.

The body of the upper block and the die lip of the lower block may each have a magnetic flux density in the range of 0.05 T to 1.0 T.

The dual-slot die may be disposed such that the second slot and the first slot are positioned sequentially from upstream to downstream along the direction of travel of the current collector.

Each of the first slot and the second slot may be disposed to form an angle in the range of 50° to 130° with respect to the surface of the current collector on which the negative electrode slurry is applied.

The dual-slot die is provided so as to be tiltable, enabling adjustment of the angle formed between the first slot and the second slot and the surface of the current collector.

The negative electrode manufacturing system may further include: a drying part configured to dry the first negative electrode slurry and the second negative electrode slurry applied onto the current collector by the dual-slot die; and a rolling part configured to press the surface of the first negative electrode slurry dried by the drying part.

The rolling part may apply pressure in a direction perpendicular to the surface of the dried first negative electrode slurry.

Furthermore, the present disclosure provides a method for manufacturing a negative electrode, the method including:
a step (S1) of sequentially applying, onto a moving current collector using the negative electrode manufacturing system of the present disclosure, a second negative electrode slurry and a first negative electrode slurry to which a magnetic field has been applied, wherein the first negative electrode slurry and the second negative electrode slurry each includes a carbon-based negative electrode active material.

The method for manufacturing a negative electrode may further include, after step (S1): a step (S2) of drying the second negative electrode slurry and the first negative electrode slurry applied onto the current collector to form a second negative electrode active layer and a first negative electrode active layer; and a step (S3) of rolling the formed first negative electrode active layer and second negative electrode active layer.

The first negative electrode active layer may have an orientation index (O.I.) before rolling that is greater than the orientation index (O.I.) after rolling, and the orientation index (O.I.) may be expressed by the following Formula 1: [Formula 1] $O . I . = {I}_{004} {/ I}_{110}$

In Formula 1,
I₀₀₄ denotes the area of the peak representing the (004) crystal plane in X-ray diffraction (XRD) measurement of the negative electrode active layer, and
I₁₁₀ denotes the area of the peak representing the (110) crystal plane in X-ray diffraction (XRD) measurement of the negative electrode active layer.
The first negative electrode active layer may have an orientation index (O.I.) in the range of 0.5 to 10 after rolling.

The current collector may move at a speed in the range of 5 m/min to 100 m/min.

### [Advantageous Effects]

The negative electrode manufacturing system according to the present disclosure directly discharges the negative electrode slurry to which a magnetic field has been applied onto the moving current collector, thereby achieving excellent productivity. In addition, the negative electrode slurry discharged from the dual-slot die is applied such that the in-plane crystallographic planes of the carbon-based negative electrode active material are oriented at a predetermined angle with respect to the surface of the current collector on which the negative electrode slurry is applied. This provides the advantage of instantiating a high degree of orientation of the carbon-based negative electrode active material after rolling.

### [Brief Description of the Drawings]

FIG. 1 is a cross-sectional view schematically illustrating the dual-die coater structure of the negative electrode manufacturing system 1 according to the present disclosure.
FIG. 2 is a structural diagram showing the dual-slot die 10 provided in the negative electrode manufacturing system according to the present disclosure.
FIG. 3 is a conceptual diagram illustrating the principle by which the in-plane crystallographic planes of the respective carbon-based negative electrode active materials in the first negative electrode slurry and the second negative electrode slurry are oriented and applied onto the current collector by the dual-slot die 10 during negative electrode manufacturing using the negative electrode manufacturing system 1 according to the present disclosure.
FIG. 4 is a conceptual diagram schematically illustrating the principle by which the tilt angle of the in-plane crystallographic plane of the carbon-based negative electrode active material relative to the current collector surface is increased by the rolling part during negative electrode manufacturing using the negative electrode manufacturing system 1 according to the present disclosure.

### [Best Mode for Carrying Out the Invention]

The present disclosure may be modified in various ways and may have various embodiments; specific embodiments will be described in detail in the detailed description.

In the present disclosure, terms such as "comprises" or "has" are intended to designate the presence of features, numbers, steps, operations, components, parts, or combinations thereof described in the specification, and should be understood not to preclude in advance the possibility of the presence or addition of one or more other features, numbers, steps, operations, components, parts, or combinations thereof.

Furthermore, in the present disclosure, when a portion of a layer, film, region, plate, or the like is described as being "on" another portion, this includes not only the case of being "directly on" the other portion, but also the case of another portion being interposed therebetween. Conversely, when a portion of a layer, film, region, plate, or the like is described as being "under" another portion, this includes not only the case of being "directly under" the other portion, but also the case of another portion being interposed therebetween. Additionally, in the present application, being disposed "on" may include being disposed not only on the upper part but also on the lower part.

In the present specification, "containing as a main component" may mean containing 50 wt% or more (or 50 vol% or more), 60 wt% or more (or 60 vol% or more), 70 wt% or more (or 70 vol% or more), 80 wt% or more (or 80 vol% or more), 90 wt% or more (or 90 vol% or more), or 95 wt% or more (or 95 vol% or more) of a defined component relative to the total weight (or total volume). For example, "containing carbon atoms as a main component" may mean containing 50 wt% or more, 60 wt% or more, 70 wt% or more, 80 wt% or more, 90 wt% or more, or 95 wt% or more based on the total weight of the carbon-based compound. In some cases, it may also mean that the entire carbon-based compound is composed of carbon atoms, contained at 100 wt%.

Hereinafter, the present disclosure will be described in more detail.

### Negative electrode Manufacturing System

The present disclosure provides a negative electrode manufacturing system including: a transfer part configured to transport a current collector; and a dual-slot die including an upper block, an intermediate block, and a lower block, and a first slot and a second slot through which a negative electrode slurry is discharged through the respective gaps between the upper block and the intermediate block and between the intermediate block and the lower block.

The negative electrode manufacturing system according to the present disclosure is applied during the manufacture of negative electrodes used in secondary batteries, and has a configuration for manufacturing electrode sheets by applying a negative electrode slurry containing a carbon-based negative electrode active material onto a current collector.

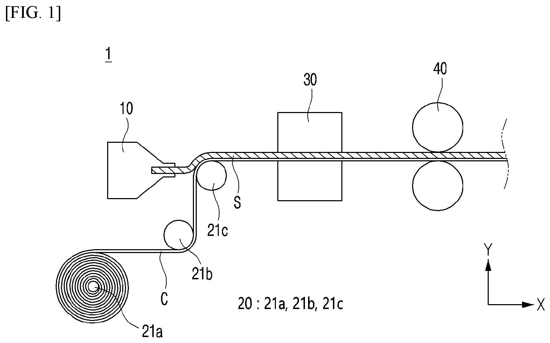

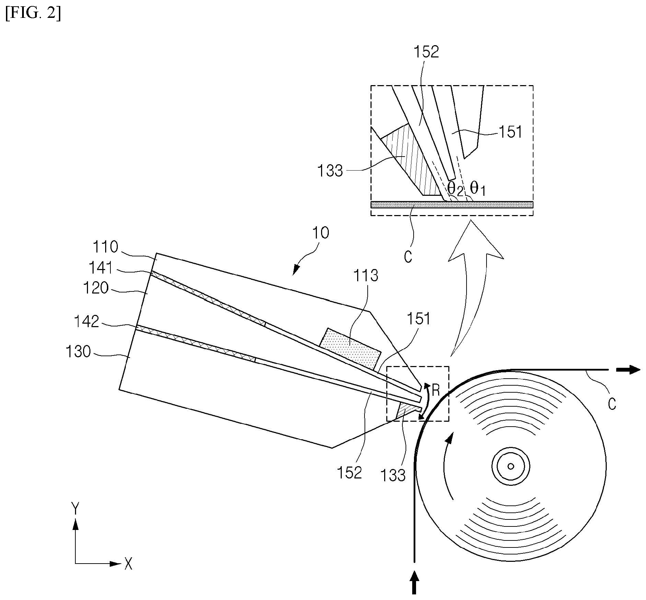

Specifically, FIG. 1 is a cross-sectional view schematically illustrating the configuration of the negative electrode manufacturing system 1 according to the present disclosure, and FIG. 2 is a structural diagram showing the structure of the dual-slot die 10 provided in the negative electrode manufacturing system 1.

Referring to FIGS. 1 and 2, the negative electrode manufacturing system 1 according to the present disclosure includes: a transfer part 20 for transporting the current collector; and a dual-slot die 10 for applying a negative electrode slurry onto the moving current collector.

The transfer part 20 is disposed on one side of the current collector and serves to transport the current collector in a contact and/or non-contact manner. To this end, the transfer part 20 may include at least one of a roll-to-roll machine, a conveyor machine, a suction machine, and an air-floating machine. For example, the transfer part 20 may include a roll-to-roll machine equipped with a plurality of rollers 21a, 21b, 21c, etc. disposed along the travel path of the current collector.

The dual-slot die 10 is equipped with a first slot 151 and a second slot 152, enabling the simultaneous double-layer coating of the same or two different types of negative electrode slurry onto the current collector. Specifically, as shown in FIG. 2, the first slot 151 may be formed in the gap between the upper block 110 and the intermediate block 120 facing each other, and the second slot 152 may be formed in the gap between the intermediate block 120 and the lower block 130 facing each other. For example, the dual-slot die 100 may have a first spacer 141 and a second spacer 142 interposed sequentially between the upper block 110, the intermediate block 120, and the lower block 130, providing gaps between them and thereby forming passages-i.e., slots 151 and 152-through which the first negative electrode slurry and the second negative electrode slurry can flow.

The vertical height of the first slot and the second slot may be determined by the thickness of the first spacer 141 and/or the second spacer 142 that instantiate the clearance between the respective blocks. The thickness of the first spacer 141 and/or the second spacer 142 may be controlled depending on the application or capacity of the secondary battery. Specifically, the thickness of each spacer 141 and 142 may independently be in the range of 50 µm to 2,000 µm; and more specifically, 50 µm to 1,500 µm; 500 µm to 1,200 µm; 800 µm to 1,200 µm; 300 µm to 500 µm; 500 µm to 1,000 µm; 80 µm to 400 µm; 80 µm to 200 µm; 200 µm to 500 µm; 100 µm to 300 µm; or 400 µm to 700 µm.

The first spacer 141 and/or the second spacer 142 have a cutout in a certain area to provide an opening part (not shown), and may be interposed in all but one side of the peripheral region of the opposing faces of the upper block 110, intermediate block 120, and lower block 130. As a result, the discharge outlet through which the negative electrode slurry is discharged to the outside is formed only between the fore-end parts of the upper block 110, the intermediate block 120, and the lower block 130. The respective fore-end parts of the upper block 110, intermediate block 120, and lower block 130 include an upper die lip 111, an intermediate die lip, and a lower die lip 131, and the first slot 151 and the second slot 152 through which the negative electrode slurry is discharged can be said to be the gaps formed between the respective die lips.

The first spacer 141 and the second spacer 142 may also function as gaskets, preventing the negative electrode slurry from leaking through the gaps between the respective blocks 110, 120, and 130 except for the areas forming the first slot 151 and the second slot 152. Therefore, it is preferable that the first spacer 141 and the second spacer 142 are made of a material having sealing properties.

Meanwhile, the upper block 110, intermediate block 120, and lower block 130 may each include, together with the upper die lip 111, intermediate die lip (not shown), and lower die lip 131 located at the respective fore-end parts, an upper body 112, an intermediate body (not shown), and a lower body 132 that extend from the respective die lips and are in close contact with the first spacer 141 and/or the second spacer 142, thereby forming the passages through which the negative electrode slurry can flow.

In this case, the upper body 112 and the lower die lip 131 may exhibit magnetism of mutually different polarities. Accordingly, a magnetic field may be formed in the space between the upper body 112 and the lower die lip 131.

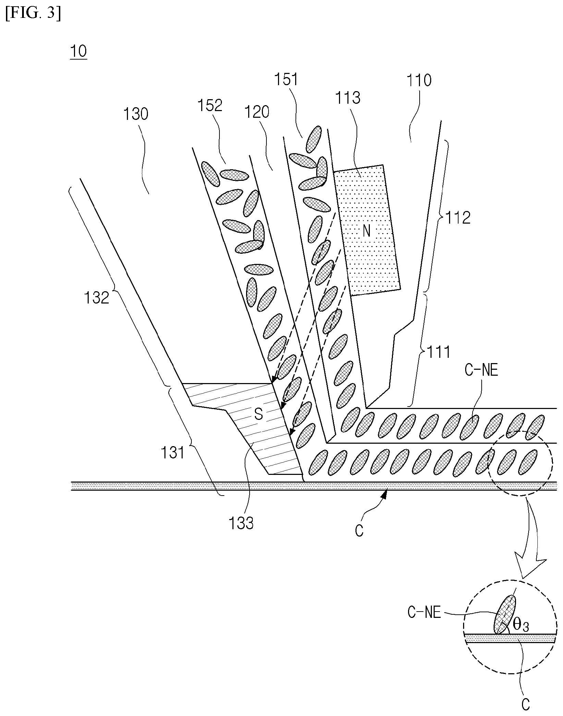

Specifically, referring to FIG. 3, the carbon-based negative electrode active material C-NE in the negative electrode slurry moves through the first slot 151 and the second slot 152 formed by the spaced-apart blocks 110, 120, and 130. Here, the carbon-based negative electrode active material C-NE of the negative electrode slurry moves in a state of high degree of freedom in sections where there is no magnetism. However, when the body of the upper block 110 (i.e., the upper body 112) and the die lip of the lower block 130 (i.e., the lower die lip 131) have magnetism of mutually different polarities, an attractive force acts between the upper body 112 and the lower die lip 131 where the magnetism is instantiated. In this case, magnetic field lines (corresponding to the 'dashed arrows' in FIG. 3) that are close to straight lines are strongly formed between the upper body 112 and the lower die lip 131. When the negative electrode slurry passes through this section, the carbon-based negative electrode active material C-NE contained in the negative electrode slurry can be oriented along the magnetic field lines such that the in-plane crystallographic planes (e.g., the (110) or (100) plane formed along the ab-axis plane of graphite) are aligned with the magnetic field lines. Since the thus-oriented carbon-based negative electrode active material C-NE is applied onto the current collector in the oriented state, the material can be oriented at a predetermined angle θ₃ with respect to the surface of the current collector C even without applying an additional magnetic field after the coating of the negative electrode slurry.

In order to exhibit magnetism, the upper body 112 and the lower die lip 131 may respectively include magnets 113 and 133 at the corresponding portions. Specifically, the upper body 112 and the lower die lip 131 may each include at least one of a permanent magnet and an electromagnet. The electromagnet may include DC electromagnets and AC electromagnets. The permanent magnet may include hard magnetic (hard-magnetic) and soft magnetic (soft-magnetic) magnets, such as NdFeB-based magnets, SmCo-based magnets, ferrite magnets, Alnico magnets, FeCrCo-based magnets, and bonded magnets (Nd-Fe-B-based, Sm-Fe-N-based, Sm-Co-based, ferrite-based).

Since the dual-slot die 10 applies a magnetic field before the negative electrode slurry S is coated onto the current collector C, it can apply a magnetic field of relatively weaker intensity compared to the case where a magnetic field is applied after the negative electrode slurry has been coated onto the current collector. Specifically, the upper body 112 and the lower die lip 131 may each have a magnetic flux density in the range of 0.05 T (Tesla, ≒500 G (Gauss)) to 1.0 T (≒ 10,000 G). For example, the upper body 112 and the lower die lip 131 may each have a magnetic flux density in the range of 0.05 T to 0.9 T; 0.05 T to 0.8 T; 0.05 T to 0.7 T; 0.05 T to 0.6 T; 0.05 T to 0.5 T; 0.1 T to 0.9 T; 0.2 T to 0.9 T; 0.3 T to 0.9 T; 0.4 T to 0.9 T; 0.5 T to 0.9 T; 0.6 T to 0.9 T; 0.2 T to 0.6 T; 0.3 T to 0.7 T; 0.4 T to 0.8 T; 0.05 T to 0.4 T; 0.05 T to 0.3 T; 0.1 T to 0.4 T; 0.05 T to 0.25 T; 0.05 T to 0.2 T; 0.05 T to 0.15 T; 0.1 T to 0.2 T; 0.2 T to 0.25 T; 0.05 T to 0.15 T; or 0.05 T to 0.09 T. By controlling the magnetic flux density of the upper body 112 and the lower die lip 131 to be within the above ranges, the present disclosure can uniformly instantiate the orientation of the crystallographic planes of the carbon-based negative electrode active material before the negative electrode slurry is discharged through the first slot 151 and the second slot 152, and apply it onto the current collector C. In addition, since the spacing between the blocks constituting the dual-slot die 10 is prevented from narrowing by preventing the magnetic flux density of the upper body 112 and the lower die lip 131 from exceeding the upper limit, high productivity can be maintained during negative electrode manufacturing.

Meanwhile, the dual-slot die 10 can be controlled with respect to the position of each slot, the position of the magnets included in the dual-slot die, the separation distance between magnets, and the angle between the slots and the current collector surface, in order to enable the in-plane crystallographic planes of the carbon-based negative electrode active material C-NE contained in the negative electrode slurry S to be oriented at a predetermined angle θ₃ with respect to the surface of the current collector C. Since the orientation angle of the applied carbon-based negative electrode active material C-NE may vary depending on the roomtemperature viscosity of the negative electrode slurry S applied onto the current collector and the transport speed of the current collector, and the final orientation angle of the carbon-based negative electrode active material C-NE may vary depending on the pressure conditions during rolling of the dried negative electrode slurry, these conditions can be appropriately controlled by comprehensively considering such parameters.

Specifically, the carbon-based negative electrode active material C-NE may be applied such that its in-plane crystallographic plane forms a predetermined angle θ₃ with respect to the surface of the current collector C. The angle θ₃ may be in the range of 45° to 135° with respect to the surface of the current collector C on which the negative electrode slurry has been applied. For example, the angle θ₃ may be an acute angle of less than 90° tilted downstream along the transfer direction of the current collector relative to the surface of the current collector C on which the negative electrode slurry has been applied. Specifically, the acute angle may be in the range of 45° to 89°; 45° to 60°; 50° to 70°; 55° to 80°; 65° to 70°; 55° to 70°; 60° to 75°; or 65° to 80°. Additionally, the angle θ₃ may be an obtuse angle exceeding 90° tilted upstream along the transfer direction of the current collector relative to the surface of the current collector C on which the negative electrode slurry has been applied, and the obtuse angle may be in the range of greater than 90° to 135° or less; 91° to 130°; 91° to 120°; 91° to 110°; 95° to 130°; 95° to 120°; 110° to 135°; 105° to 120°; or 100° to 115°. The angle θ₃ may be an angle that takes into consideration ensuring that the orientation angle of the carbon-based negative electrode active material C-NE after rolling of the dried negative electrode slurry is as close to perpendicular as possible.

The dual-slot die 10 may be disposed at the upper part of the moving current collector C, with the second slot 152 and the first slot 151 positioned sequentially from upstream to downstream along the direction of travel of the current collector. In this case, since the magnetic field lines induced between the upper body 112 and the lower die lip 131 have the same value or a similar value with a predetermined deviation as the orientation angle θ₃ of the applied carbon-based negative electrode active material C-NE, there is an advantage in that the orientation angle of the carbon-based negative electrode active material C-NE can be easily controlled.

As described above, since the dual-slot die 10 exhibits magnetism of mutually different polarities in the body of the upper block and the die lip of the lower block, the in-plane crystallographic planes of the carbon-based negative electrode active material C-NE can be oriented at a predetermined angle as the negative electrode slurry passes through the slots 151 and 152. Here, the in-plane crystallographic planes of the carbon-based negative electrode active material C-NE are oriented along the magnetic field lines formed between the upper body 112 and the lower die lip 131. Therefore, the orientation angle of the in-plane crystallographic planes of the carbon-based negative electrode active material C-NE can be adjusted by controlling the direction of the magnetic field lines.

The direction of the magnetic field lines can be adjusted by controlling the separation distance between the first magnet 113 included in the upper body 112 and the second magnet 133 included in the lower die lip 131. For example, the in-plane crystallographic planes of the carbon-based negative electrode active material C-NE may be oriented more perpendicularly as the separation distance between the first magnet 113 and the second magnet 133 decreases, and more horizontally as the separation distance increases, relative to the direction of extension of the first slot 151 and/or the second slot 152. The present disclosure can easily adjust the orientation direction of the in-plane crystallographic planes of the carbon-based negative electrode active material C-NE before application by adjusting the separation distance between the first magnet 113 and the second magnet 133. This not only minimizes the decrease in orientation of the carbon-based negative electrode active material due to the viscosity of the negative electrode slurry or the transport speed of the current collector, but also expands the range of applicable rolling conditions, providing the advantage of greater freedom in process design.

The inner surface of the body of the upper block 110 may include a means for adjusting the position of the first magnet 113 so as to control the separation distance between the first magnet 113 and the second magnet 133. The shape and structure of such means may be appropriately applied within a range that does not interfere with the movement of the first negative electrode slurry. In addition, as shown in FIG. 2, the first slot 151 and the second slot 152 may be arranged such that the angles θ₁ and θ₂ formed respectively with the surface of the current collector on which each negative electrode slurry is applied are each in the range of 50° to 130°. Specifically, considering the productivity of the negative electrode, the current collector may be controlled to move at a speed of 5 m/min to 100 m/min. However, when the transport speed of the current collector exceeds a certain speed, the carbon-based negative electrode active material C-NE is applied onto the current collector at a relatively lower angle than the orientation angle in the dual-slot die 10, which may reduce the degree of orientation of the carbon-based negative electrode active material. Accordingly, the present disclosure minimizes the decrease in orientation angle due to the transport speed of the current collector by adjusting the angles θ₁ and θ₂ of each slot 151 and 152 of the dual-slot die 10 to be within the aforementioned range with respect to the surface of the current collector on which the negative electrode slurry has been applied. In this case, the angles θ₁ and θ₂ formed by the first slot 151 and the second slot 152 with the surface of the current collector on which the negative electrode slurry has been applied may be different from each other. Specifically, the angles θ₁ and θ₂ may each be in the range of 45° to 89°; 45° to 60°; 50° to 70°; 55° to 80°; 65° to 70°; 55° to 70°; 60° to 75°; 65° to 80°; 70° to 115°; 80° to 110°; 91° to 135°; 91° to 120°; 91° to 115°; 91° to 110°; 95° to 105°; 95° to 125°; 100° to 125°; 101° to 115°; or 91° to 105°.

The dual-slot die 10 may further include a means for adjusting the angles formed by the first slot 151 and the second slot 152 with the surface of the current collector on which the negative electrode slurry has been applied. Specifically, the dual-slot die 10 may include a tilting part (not shown) at the rear portion where the blocks 110, 120, and 130 and the spacers 141 and 142 are fixed, which instantiates rotation or tilting ('R' in FIG. 2) of the dual-slot die 10. The tilting part may include actuators such as drive motors, rotary cylinders, and the like. Since the tilting part can instantiate rotation or tilting of the dual-slot die 10 around a specific axis located at the rear of the dual-slot die 10, the angles θ₁ and θ₂ formed by the first slot 151 and the second slot 152 with the surface of the current collector on which the negative electrode slurry has been applied can be easily adjusted.

Furthermore, the negative electrode manufacturing system 1 according to the present disclosure may further include a drying part 30 for drying the first negative electrode slurry and the second negative electrode slurry S applied onto the current collector C by the dual-slot die 10, and a rolling part 40 for pressing the surface of the first negative electrode slurry dried by the drying part.

The drying part 30 serves not only to remove the solvent contained in the negative electrode slurry to form the negative electrode active layer, but also to fix the carbon-based negative electrode active material oriented inside the negative electrode slurry. To this end, the drying part 30 may be positioned such that the negative electrode slurry can be dried before the orientation of the in-plane crystallographic planes of the carbon-based negative electrode active material applied on the surface of the current collector C decreases.
The drying part 30 is formed by including a wall (not shown) that blocks the surroundings except for the inlet and outlet for introducing and withdrawing the current collector C onto which the negative electrode slurry has been applied, and a dryer (not shown) for drying the negative electrode slurry on the wall at the side where the current collector C onto which the negative electrode slurry has been applied is withdrawn.

When the current collector C onto which the negative electrode slurry has been applied enters through the inlet of the drying part 300, it receives energy such as light, wavelength, and heat supplied from the opposite wall. Therefore, it is preferable that the wall is made of a heat insulating material to prevent heat loss caused by the transfer of internal energy to the outside.

The drying part 30 can apply energy such as light, wavelength, and heat, and can be used without particular limitation as long as it is commonly applied in the art. For example, the drying part 30 may use a UV dryer, a near-infrared dryer, a far-infrared dryer, a hot-air dryer, a vacuum oven, and the like, either alone or in combination.

The rolling part 40 serves to increase the density of the negative electrode active layer by applying pressure to the first negative electrode slurry and the second negative electrode slurry dried by the drying part 30. In this case, the rolling part 40 may include a first pressing roller and a second pressing roller that are provided corresponding to both surfaces of the current collector on which the negative electrode slurry has been dried.

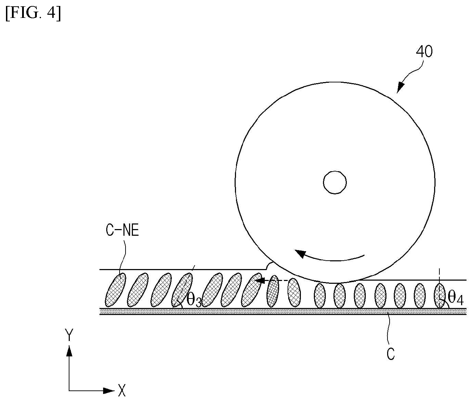

Specifically, referring to FIG. 4, the first pressing roller and the second pressing roller may be provided corresponding to the upper and lower surfaces of the current collector, respectively, and may apply pressure in a direction perpendicular to the surface of the first negative electrode slurry dried on the current collector. When the pressing rollers apply pressure in a direction perpendicular to the surface of the first negative electrode slurry, a force acts in the direction perpendicular to the surface of the first negative electrode slurry. At this point, upstream of the pressing point, the force by which the negative electrode slurry moves along the current collector and the force acting along the surface due to the pressing roller (in the direction of the 'dashed arrows' in FIG. 4) conflict with each other, generating resistance. In this case, if the orientation angle θ₃ of the in-plane crystallographic plane of the carbon-based negative electrode active material C-NE is an acute angle tilted downstream along the direction of travel of the current collector with respect to the surface of the current collector on which the negative electrode slurry has been applied, the orientation angle of the in-plane crystallographic planes of the carbon-based negative electrode active material in the relevant area can be adjusted in the direction in which the resistance is generated. Additionally, during rolling, the carbon-based negative electrode active material contained in the negative electrode slurry undergoes compressive stress in its internal microstructure. Therefore, the carbon-based negative electrode active material is ultimately rearranged in the direction in which the pressure was applied, thereby minimizing the compressive stress. Here, the orientation angle θ₄ of the in-plane crystallographic planes of the carbon-based negative electrode active material in the rolled first negative electrode slurry and second negative electrode slurry is oriented close to perpendicular with respect to the current collector surface.

Meanwhile, the first pressing roller and the second pressing roller are formed of materials having different hardness values. If the first pressing roller and the second pressing roller have the same hardness value, a phenomenon may occur in which the final negative electrode sheet is curled or warped due to the difference in elongation between the current collector C and the dried negative electrode slurry S. Specifically, since the current collector C has a smaller elongation than the dried negative electrode slurry, a phenomenon may occur in which the negative electrode sheet curls in the direction of the current collector C. To prevent this, the first pressing roller and the second pressing roller may be formed of materials having different hardness values. In this case, since different pressures or different forces are applied to the current collector C and the dried negative electrode slurry S during rolling, the difference in elongation generated between the current collector C and the dried negative electrode slurry S can be reduced.

The first pressing roller and the second pressing roller may be formed of a metallic material and/or a synthetic resin, but are not limited thereto.

The negative electrode manufacturing system according to the present disclosure has the above-described configuration, and thus has the advantage of excellent productivity and highly instantiated orientation of the carbon-based negative electrode active material after rolling.

### Method for Manufacturing Negative electrode

The present disclosure provides a method for manufacturing a negative electrode, carried out using the negative electrode manufacturing system of the present disclosure described above.

The method for manufacturing a negative electrode is a method for manufacturing a negative electrode using the negative electrode manufacturing system of the present disclosure described above, and includes a step (S1) of sequentially applying the second negative electrode slurry and the first negative electrode slurry, to which a magnetic field has been applied, onto a current collector, wherein the first negative electrode slurry and the second negative electrode slurry each include a carbon-based negative electrode active material. That is, the manufacturing method is characterized in that the application of a magnetic field to the negative electrode slurry containing a carbon-based negative electrode active material and the coating of the negative electrode slurry proceed simultaneously. Accordingly, the manufacturing method is economical because the crystal orientation of the carbon-based negative electrode active material is not performed separately after the coating of the negative electrode slurry, making the process simple, and has the advantage of being easily applicable to mass production due to its superior processability.

Since the dual-slot die provided in the negative electrode manufacturing system of the present disclosure is disposed such that the second slot and the first slot are positioned from upstream to downstream along the direction of travel of the current collector, the second negative electrode slurry and the first negative electrode slurry are sequentially applied onto the current collector.

The first negative electrode slurry and the second negative electrode slurry may each contain a magnetically oriented carbon-based negative electrode active material as described above, and the magnetic orientation may be performed by applying a magnetic field before the negative electrode slurry is discharged onto the current collector. The carbon-based negative electrode active material of each negative electrode slurry applied onto the current collector may have in-plane crystallographic planes forming a predetermined angle (specifically, θ₃) with respect to the surface of the current collector on which the negative electrode slurry has been applied. Here, the angle θ₃ may be in the range of 45° to 89°; 45° to 60°; 50° to 70°; 55° to 80°; 65° to 70°; 55° to 70°; 60° to 75°; 65° to 80°; greater than 90° to 135° or less; 91° to 130°; 91° to 120°; 91° to 110°; 95° to 130°; 95° to 120°; 110° to 135°; 105° to 120°; or 100° to 115°.

Step (S1) may be carried out on a current collector moving at a predetermined speed, and the transport speed may be the same as the speed at which the negative electrode slurry is applied to the current collector. Specifically, the current collector may move at a speed in the range of 5 to 100 m/min. For example, the current collector may move at a speed in the range of 5 to 35 m/min; 10 to 35 m/min; 20 to 35 m/min; 10 to 30 m/min; 5 to 20 m/min; 5 to 25 m/min; or 15 to 25 m/min. The present disclosure prevents the negative electrode slurry from being non-uniformly applied on the surface of the current collector due to an excessively slow coating speed by moving the current collector within the above range, while also preventing deterioration of process efficiency and productivity; and prevents the crystal alignment state of the carbon-based negative electrode active material present in the negative electrode slurry from collapsing due to an excessively fast speed, thereby avoiding a reduction in the degree of orientation.

Furthermore, the method for manufacturing a negative electrode may further include, after step (S1): a step (S2) of drying the second negative electrode slurry and the first negative electrode slurry applied onto the current collector to form a second negative electrode active layer and a first negative electrode active layer; and a step (S3) of rolling the formed first negative electrode active layer and second negative electrode active layer.

Step (S2) refers to the process of fixing the carbon-based negative electrode active material contained in each negative electrode slurry onto the current collector by drying the coated first negative electrode slurry and second negative electrode slurry. This step (S2) can be applied without particular limitation as long as it is a method capable of fixing the carbon-based negative electrode active material while minimizing the loss of the degree of orientation with respect to the surface of the current collector of the carbon-based negative electrode active material contained in the negative electrode slurry applied to the current collector. Specifically, the drying may be performed by applying energy such as light, wavelength, and heat, and for this purpose, a UV dryer, a near-infrared dryer, a far-infrared dryer, a hot-air dryer, a vacuum oven, and the like may be used alone or in combination.

Step (S3) refers to the process of increasing the density of the formed first negative electrode active layer and second negative electrode active layer, and the process may be performed by applying pressure to the surface of the first negative electrode active layer.

The pressure may be applied by a first pressing roller and a second pressing roller that are provided corresponding to both surfaces of the current collector on which the first negative electrode active layer and the second negative electrode active layer have been formed.

The first pressing roller and the second pressing roller may be provided corresponding to the upper and lower surfaces of the current collector, respectively, and may apply pressure in a direction perpendicular to the surface of the first negative electrode slurry dried on the current collector. In this process, the orientation angle of the in-plane crystallographic planes of the carbon-based negative electrode active material contained in each negative electrode active layer may increase to be close to perpendicular due to the applied pressure.

That is, the method for manufacturing a negative electrode according to the present disclosure includes: in step (S1), applying a negative electrode slurry oriented at a predetermined angle onto a current collector to orient the in-plane crystallographic planes of the carbon-based negative electrode active material at an angle θ₃ within a predetermined range with respect to the surface of the current collector on which the negative electrode slurry has been applied; and in step (S3), applying pressure to the negative electrode active layer after drying, thereby tilting the tilt angle of the in-plane crystallographic planes of the carbon-based negative electrode active material. Accordingly, the method for manufacturing a negative electrode according to the present disclosure can manufacture a negative electrode in which the in-plane crystallographic planes of the carbon-based negative electrode active material are oriented at a high angle θ₄ close to perpendicular.

As an example, when X-ray diffraction (XRD) analysis is performed on the first negative electrode active layer formed in step (S2) and the first negative electrode active layer formed in step (S3), the first negative electrode active layer before rolling formed in step (S2) may exhibit a larger orientation index (O.I.) as expressed by the following Formula 1 than the first negative electrode active layer rolled in step (S3). [Formula 1] $O . I . = {I}_{004} {/ I}_{110}$

In Formula 1,
I₀₀₄ denotes the area of the peak representing the (004) crystal plane in X-ray diffraction (XRD) measurement of the negative electrode active layer, and
I₁₁₀ denotes the area of the peak representing the (110) crystal plane in X-ray diffraction (XRD) measurement of the negative electrode active layer.

The orientation index (O.I.) of the carbon-based negative electrode active material as defined by Formula 1 above can serve as a relative indicator representing the degree to which the crystal planes of the carbon-based negative electrode active material, as measured by XRD, are oriented in a specific direction, specifically the direction relative to the surface of the negative electrode current collector. The negative electrode active layer exhibits peaks for graphite as the carbon-based negative electrode active material at 2θ = 26.5 ± 0.2°, 42.4 ± 0.2°, 43.4 ± 0.2°, 44.6 ± 0.2°, 54.7 ± 0.2°, and 77.5 ± 0.2° in XRD measurement. These peaks represent the (002) plane, the (100) plane, the (101)R plane, the (101)H plane, the (004) plane, and the (110) plane, respectively. Additionally, the peak appearing at 2θ = 43.4 ± 0.2° may also be considered as an overlap of the peak corresponding to the (101)R plane of the carbon-based negative electrode active material and the peak corresponding to the (111) plane of the current collector, for example copper (Cu).

Among these, the orientation index (O.I.) of the carbon-based negative electrode active material can be measured through the intensity ratio of the peak at 20 = 54.7 ± 0.2° representing the (004) plane and the peak at 2θ = 77.5 ± 0.2° representing the (110) plane. Here, the peak at 2θ = 54.7 ± 0.2° is a peak representing the (110) plane, which is inclined with respect to the negative electrode current collector among the crystal planes of the carbon-based negative electrode active material, and the (110) plane represents the ab-axis crystal plane, which is the in-plane crystallographic plane of the carbon-based negative electrode active material. Therefore, the orientation index (O.I.) may mean that the closer its value is to 0, the closer the inclination angle with respect to the negative electrode current collector surface is to 90°, and the larger its value, the closer the inclination angle is to 0° or 180°.

The negative electrode manufactured according to the present disclosure may be rolled and the orientation index (O.I.) as expressed by Formula 1 in X-ray diffraction analysis of the first negative electrode active layer may be 0.5 to 10. Specifically, the first negative electrode active layer of the negative electrode may satisfy an orientation index (O.I.) in the range of 0.5 to 9; 0.5 to 8; 0.5 to 6; 0.5 to 5; 0.5 to 3.5; 0.5 to 2.9; 1 to 10; 3 to 10; 5 to 10; 7 to 10; 2 to 6; 2 to 8; 4 to 9; 3 to 9; 3.5 to 6.0; 4.5 to 9.0; 4.2 to 8.9; or 2.1 to 5.5. This means that the carbon-based negative electrode active material of the negative electrode is aligned at an angle of 70° or more, 70~80°, 70~90°, 80~90°, 75~85°, 70~85°, or 85~90° with respect to the negative electrode current collector.

In comparison, the first negative electrode active layer dried in step (S2) that has not been rolled may have a relatively low angle of the in-plane crystallographic planes of the carbon-based negative electrode active material with respect to the current collector, and thus the orientation index (O.I.) may have a larger value than that of the calendered first negative electrode active layer.

Meanwhile, the carbon-based negative electrode active material contained in the first negative electrode slurry and the second negative electrode slurry may include materials commonly used as carbon-based negative electrode active materials for secondary batteries. Specifically, the carbon-based negative electrode active material refers to a material having carbon atoms as the main component, and such carbon-based negative electrode active material may include graphite. The graphite may include at least one of natural graphite and artificial graphite, but preferably may include natural graphite or a mixture of natural graphite and artificial graphite.

The carbon-based negative electrode active material is preferably a spherical graphite agglomerate formed by aggregation of a plurality of flake-type graphite particles. As the flake-type graphite, in addition to natural graphite and artificial graphite, mesocarbon microbeads (bulk mesophase) made from tar/pitch, graphitized coke products (raw coke, green coke, pitch coke, needle coke, petroleum coke, etc.), and the like can be cited; in particular, it is preferable to use a plurality of natural graphite with high crystallinity as the assembled material. Furthermore, one graphite agglomerate may be formed by assembling 2 to 100, preferably 3 to 20, flake-type graphite.

The carbon-based negative electrode active material may be included as the main component of the first negative electrode slurry and the second negative electrode slurry at a high content. Specifically, the carbon-based negative electrode active material may be included at 60 wt% or more, 70 wt% or more, 80 wt% or more, 90 wt% or more, 95 wt% or more, 75 wt% to 99 wt%, 80 wt% to 98 wt%, or 90 wt% to 99 wt% based on the total weight of each negative electrode slurry.

In addition, the first negative electrode slurry and the second negative electrode slurry may further include a conductive material, a binder, a thickener, and the like, in addition to the carbon-based negative electrode active material, and these may be applied as those commonly used in the art.

The method for manufacturing a negative electrode according to the present disclosure has the above-described configuration, and thus enables the manufacture of negative electrodes with high productivity. In addition, the manufactured negative electrode has the advantages of excellent energy density and superior degree of orientation of the carbon-based negative electrode active material.

The technical scope of the present disclosure should not be limited to the content described in the detailed description of the specification, but must be defined by the claims.

### [Description of Reference Numerals]

| | | | |
|---|---|---|---|
| 1: | NEGATIVE ELECTRODE MANUFACTURING SYSTEM | | |
| 10: | DUAL-SLOT DIE | | |
| 20: | TRANSFER PART | 21A, 21B, 21C: | ROLLERS OF ROLL-TO-ROLL MACHINE |
| 30: | DRYING PART | 40: | ROLLING PART |
| 110: | UPPER BLOCK | 120: | INTERMEDIATE BLOCK |
| 130: | LOWER BLOCK | | |
| 111: | UPPER DIE LIP | 131: | LOWER DIE LIP |
| 112: | UPPER BODY | 132: | LOWER BODY |
| 113: | FIRST MAGNET | | |
| 133: | SECOND MAGNET | | |
| 141 AND 142: | FIRST SPACER AND SECOND SPACER | | |
| 151 AND 152: | FIRST SLOT AND SECOND SLOT | | |
| C: | CURRENT COLLECTOR | | |
| C-NE: | CARBON-BASED NEGATIVE ELECTRODE ACTIVE MATERIAL | | |
| S: | NEGATIVE ELECTRODE SLURRY | | |

## Claims

1. A negative electrode manufacturing system comprising:
a transfer part configured to transport a current collector; and
a dual-slot die comprising an upper block, an intermediate block, and a lower block, a first slot provided through a gap between the upper block and the intermediate block and configured to discharge a first negative electrode slurry, and a second slot provided through a gap between the intermediate block and the lower block and configured to discharge a second negative electrode slurry,
wherein when each of the upper block, intermediate block, and lower block is divided into a die lip forming a discharge outlet at each fore-end part and a body extending from the die lip, the body of the upper block and the die lip of the lower block exhibit magnetism of mutually different polarities.

2. The negative electrode manufacturing system of claim 1, wherein the body of the upper block and the die lip of the lower block each comprise at least one of a permanent magnet and an electromagnet.

3. The negative electrode manufacturing system of claim 2, wherein a distance between a magnet included in the body of the upper block and a magnet included in the die lip of the lower block is adjustable.

4. The negative electrode manufacturing system of claim 1, wherein the body of the upper block and the die lip of the lower block each have a magnetic flux density in the range of 0.05 T to 1.0 T.

5. The negative electrode manufacturing system of claim 1, wherein the dual-slot die is disposed such that the second slot and the first slot are positioned sequentially from upstream to downstream along the direction of travel of the current collector.

6. The negative electrode manufacturing system of claim 1, wherein each of the first slot and the second slot is disposed to form an angle in the range of 50° to 130° with respect to the surface of the current collector on which a negative electrode slurry is applied.

7. The negative electrode manufacturing system of claim 6, wherein the dual-slot die is provided so as to be tiltable, enabling adjustment of the angle formed between the first slot and the second slot and the surface of the current collector.

8. The negative electrode manufacturing system of claim 1, further comprising:
a drying part configured to dry the first negative electrode slurry and the second negative electrode slurry applied onto the current collector by the dual-slot die; and
a rolling part configured to press the surface of the first negative electrode slurry dried by the drying part.

9. The negative electrode manufacturing system of claim 8, wherein the rolling part applies pressure in a direction perpendicular to the surface of the dried first negative electrode slurry.

10. A method for manufacturing a negative electrode, comprising:
a step (S1) of sequentially applying, onto a moving current collector using the negative electrode manufacturing system of claim 1, a second negative electrode slurry and a first negative electrode slurry to which a magnetic field has been applied, wherein
the first negative electrode slurry and the second negative electrode slurry each comprises a carbon-based negative electrode active material.

11. The method for manufacturing a negative electrode of claim 10, further comprising, after step (S1):
a step (S2) of drying the second negative electrode slurry and the first negative electrode slurry applied onto the current collector to form a second negative electrode active layer and a first negative electrode active layer; and
a step (S3) of rolling the formed first negative electrode active layer and second negative electrode active layer.

12. The method for manufacturing a negative electrode of claim 10, wherein
the first negative electrode active layer has an orientation index (O.I.) before rolling that is greater than the orientation index (O.I.) after rolling, and
the orientation index (O.I.) is expressed by the following Formula 1: [Formula 1] $O . I . = {I}_{004} {/ I}_{110}$
In Formula 1,
I₀₀₄ denotes the area of the peak representing the (004) crystal plane in X-ray diffraction (XRD) measurement of the negative electrode active layer, and
I₁₁₀ denotes the area of the peak representing the (110) crystal plane in X-ray diffraction (XRD) measurement of the negative electrode active layer.

13. The method for manufacturing a negative electrode of claim 12, wherein
the first negative electrode active layer has an orientation index (O.I.) in the range of 0.5 to 10 after rolling.

14. The method for manufacturing a negative electrode of claim 10, wherein
the current collector moves at a speed in the range of 5 m/min to 100 m/min.
